# EUROPÄISCHE PATENTSCHRIFT

(11) **EP 2 873 962 B1**
(45) Veröffentlichungstag und Bekanntmachung des Hinweises auf die Patenterteilung: **02.09.2020**
(21) Anmeldenummer: 14193144.4
(22) Anmeldetag: 14.11.2014
(51) Int. Cl.: G01N 1/31, G01N 1/36, G01N 1/30

(54) **Fixierung von Gewebeproben unter Verwendung Aldehyde freisetzender stickstoffhaltiger Verbindungen**
Fixing of tissue samples using aldehyde-releasing compounds containing nitrogen
Fixation d'échantillons de tissus à l'aide de liaisons contenant de l'azote à libération d'aldéhyde

(30) Priorität: 15.11.2013 DE 102013223384
(43) Veröffentlichungstag der Anmeldung: 20.05.2015
(73) Patentinhaber: Leica Biosystems Nussloch GmbH, 69226 Nussloch (DE)
(72) Erfinder: Berberich, Markus, 69120 Heidelberg (DE); Ulbrich, Hermann, 76669 Bad Schönborn-Mingolsheim (DE)
(74) Vertreter: m patent group

(56) Entgegenhaltungen:
- DE-A1- 3 635 599
- US-A1- 2011 041 599
- US-A1- 2012 214 195

## Beschreibung

Die vorliegende Erfindung betrifft ein Verfahren zur Fixierung von Gewebeproben und eine Anordnung mit einem Gewebeprozessor gemäß den Oberbegriffen der unabhängigen Patentansprüche.

### Stand der Technik

Verfahren zur Fixierung von Gewebeproben unter Verwendung von wässrigen Formaldehydlösungen sind seit langem bekannt.

Eine gesättigte, wässrige Formaldehydlösung mit 37 Gewichts- bzw. 40 Volumenprozent Formaldehyd wird auch als Formalin bezeichnet. Gehaltsangaben von Formaldehydlösungen, die für die Fixierung von Gewebeproben eingesetzt werden, beziehen sich typischerweise hierauf. So enthält beispielsweise sogenanntes zehnprozentiges Formalin 4 Volumenprozent Formaldehyd.

Formaldehyd wird in wässriger Lösung rasch zu Methylenglycol hydratisiert, das seinerseits mit Makromolekülen wie Proteinen und Glycoproteinen im zu fixierenden Gewebe reagiert. Unter anderem an geeigneten Amin-, Amid- und reaktiven Alkoholgruppen werden zunächst Hydroxymethylgruppen gebildet. Erst bei längeren Fixierungszeiten werden diese in nennenswertem Umfang quervernetzt. Formaldehyd reagiert auch mit Proteinen im Zellkern und stabilisiert dabei die Proteinhülle der Nucleinsäuren. Auch die freien Aminogruppen der Nucleinsäuren selbst können mit Formaldehyd reagieren, ebenso wie Doppelbindungen und Thiolgruppen in ungesättigten Fettsäuren. Reine Kohlenhydrate reagieren im Allgemeinen dagegen nicht mit Formaldehyd.

Die reaktiven Gruppen von Peptiden und Proteinen, die am intensivsten mit Methylenglycol reagieren und damit am besten auf eine Formaldehydfixierung ansprechen, sind die Amingruppen von Lysin, Cystein, Histidin, Arginin und Tyrosin und die Hydroxylgruppen von Serin und Threonin. Bei einer sogenannten Überfixierung (Gerbung) kommt es zu einer Quervernetzung von Lysin und den Amiden des Proteinrückgrats. Aufgrund der heute typischerweise verwendeten kürzeren Fixierungszeiten treten derartige Reaktionen kaum auf.

In einem in der US 2012/0214195 A1 beschriebenen Verfahren wird eine Gewebeprobe mit einer Aldehyd-Fixierlösung auf einem ersten und auf einem zweiten Temperaturniveau jeweils für eine Zeitspanne in Kontakt gebracht. Mit bestimmten Temperaturen und Zeiten sollen verbesserte Eigenschaften erzielt werden.

In der US 2011/041599 A1 wird ein Verfahren zum Betrieb eines Gewebeprozessors beschrieben. Während des Betriebs des Gewebeprozessors wird ein Reagenz aus einem Behälter in eine Retorte geleitet, die keine Gewebeprobe enthält. Danach wird das Reagenz in den Behälter zurückgeführt. Während der Zuführung, Rückführung und/oder zwischen Zuführung und Rückführung wird ein Messwert von einem Sensor des Gewebeverarbeiters erfasst. Dieser Wert ist repräsentativ für eine Konzentration des Reagenz. Während dieser Zufuhr, dieser Rückführung und/oder dazwischen wird keine Gewebeprobe in die Retorte gegeben. Die DE 36 35 599 A1 betrifft ein Verfahren zur Behandlung von Proben aus menschlichem oder tierischem Gewebe, aus denen nachfolgend Schnitte für die mikroskopische Untersuchung angefertigt werden sollen, wobei die Gewebeproben in einer flüssigen Fixierlösung fixiert und/oder in durch Erwärmung verflüssigtem Paraffin mit Paraffin getränkt werden. Die Gewebeproben werden in ein druckdicht abschließbares, mit Fixierlösung oder flüssigem Paraffin teilweise gefülltes Behandlungsgefäß eingebracht und das Behandlungsgefäß wird druckdicht verschlossen. In dem Behandlungsgefäßinneren werden dann während einer vorgegebenen Behandlungsdauer zumindest zeitweise durch alternierende Absaugung der über der Fixierlösung bzw. dem Paraffinbad befindlichen Luft und Zufuhr von Umgebungsatmosphäre Druckpulsationen erzeugt werden.

Formaldehyd weist zwar gute Fixierungseigenschaften auf, ist jedoch stark gesundheitsgefährdend und kann bei der Exposition Allergien, Haut-, Atemwegs- und Augenreizungen verursachen. Formaldehyd wird ferner als krebserzeugend angesehen. Daher bestehen Bestrebungen, Formaldehyd zur Fixierung von Gewebeproben durch unschädlichere Verbindungen zu ersetzen. Entsprechendes gilt auch für andere Fixierungsmittel wie Glutaraldehyd und Osmiumtetroxid.

In diesem Zusammenhang können Verbindungen eingesetzt werden, die geeignete Aldehyde, vor allem Formaldehyd, freisetzen. Hierbei handelt es sich beispielsweise um Urotropin. Die Verwendung solcher Verbindungen ist beispielsweise aus der EP 1895 287 B1 (DE 10 2006 040 315 B4, US 7,915,007 B2) bekannt. Sie werden auch als Abspalter, Releaser oder Donoren der jeweiligen Aldehyde bezeichnet.

Nachteilig an der Verwendung Aldehyde freisetzender Verbindungen ist, dass diese in einer Gleichgewichtsreaktion normalerweise nur die Menge Aldehyd freisetzen, die durch die Reaktion mit der Gewebeprobe verbraucht wird. Die Fixierungsgeschwindigkeit ist daher im Vergleich zu konventionellen Formalinlösungen, wo Formaldehyd bzw. dessen Hydratisierungsprodukt Methylenglycol im Überschuss vorliegt, vergleichsweise langsam. Trotz der einfacheren Anwendung und der reduzierten Gesundheitsgefahren weisen Fixierungsverfahren unter Verwendung entsprechender Donoren daher Nachteile auf.

Es besteht daher der Bedarf nach verbesserten, insbesondere beschleunigten Möglichkeiten zur Fixierung von Gewebeproben unter Verwendung von Verbindungen, die Aldehyde freisetzen.

### Offenbarung der Erfindung

Vor diesem Hintergrund schlägt die vorliegende Erfindung ein Verfahren zur Fixierung von Gewebeproben und eine Anordnung mit einem Gewebeprozessor mit den Merkmalen der unabhängigen Patentansprüche vor. Bevorzugte Ausgestaltungen sind jeweils Gegenstand der abhängigen Patentansprüche sowie der nachfolgenden Beschreibung.

Vor der Erläuterung der Merkmale und Vorteile der vorliegenden Erfindung werden deren Grundlagen und die verwendeten Begriffe erläutert.

Die vorliegende Anmeldung verwendet zur Charakterisierung von Drücken und Temperaturen die Begriffe "Druckniveau" und "Temperaturniveau", wodurch zum Ausdruck gebracht werden soll, dass entsprechende Drücke und Temperaturen im Rahmen der Erfindung nicht in Form exakter Druck- bzw. Temperaturwerte verwendet werden müssen, um das erfinderische Konzept zu verwirklichen. Jedoch bewegen sich derartige Drücke und Temperaturen typischerweise in bestimmten Bereichen, die beispielsweise ± 1%, 5%, 10%, 20% oder sogar 50% um einen Mittelwert liegen. Insbesondere schließen beispielsweise Druckniveaus unvermeidliche oder zu erwartende Druckverluste, beispielsweise aufgrund von Abkühlungseffekten, ein. Entsprechendes gilt für Temperaturniveaus. Bei den hier in kPa angegebenen Druckniveaus handelt es sich um Drücke über Atmosphärendruck. Unter einer Verbindung, die zur druck- und/oder temperaturabhängigen Freisetzung zumindest eines Aldehyds befähigt ist, wird hier eine Verbindung verstanden, die in einem geeigneten Lösungsmittel in Wechselwirkung mit diesem Lösungsmittel, insbesondere in einer Gleichgewichtsreaktion, zumindest ein Aldehyd als Produkt bildet. Die zur druck- und/oder temperaturabhängigen Freisetzung zumindest eines Aldehyds befähigte Verbindung stellt das Edukt einer entsprechenden Gleichgewichtsreaktion dar. Insbesondere werden im Rahmen der vorliegenden Erfindung solche Verbindungen verwendet, bei denen eine entsprechende Gleichgewichtsreaktion auf Seiten des Edukts, also der zur druck- und/oder temperaturabhängigen Freisetzung zumindest eines Aldehyds befähigten Verbindung selbst, liegt. Eine solche Verbindung bildet das zumindest eine Aldehyd in dem Lösungsmittel immer nur in der Menge, wie letzteres dem Reaktionssystem entzogen wird. Entsprechende Reaktionen sind, wie eingangs erwähnt, zur Fixierung von Gewebeproben grundsätzlich bekannt.

Druck- und/oder temperaturabhängig ist die Freisetzung dann, wenn der Schwerpunkt des erwähnten Gleichgewichts und/oder eine Reaktionsgeschwindigkeit in Richtung der Produkte oder Edukte durch eine Änderung von Druck und/oder Temperatur beeinflusst werden kann. Im Rahmen der vorliegenden Erfindung sind dabei insbesondere solche Verbindungen von Interesse, bei denen die Bildung des zumindest einen Aldehyds durch eine Temperaturerhöhung und/oder eine Druckerhöhung beschleunigt bzw. erhöht werden kann.

Entsprechende stickstoffhaltige Verbindungen bilden sich insbesondere, wie auch nachfolgend noch erläutert, durch eine Komplexbildung aus Ammoniak und dem entsprechenden wenigstens einen Aldehyd. Es handelt sich somit nicht um reine Kondensationsprodukte und/oder Hydratisierungsprodukte entsprechender Aldehyde. Insbesondere fallen durch Hydratisierung gebildete Verbindungen wie Methylenglycol oder Polymerisate wie Paraformaldehyd nicht hierunter.

### Vorteile der Erfindung

Die vorliegende Erfindung geht von einem Verfahren zur Fixierung wenigstens einer Gewebeprobe aus, das unter Verwendung eines Gewebeprozessors durchgeführt wird und bei dem die wenigstens eine Gewebeprobe auf einem ersten Temperaturniveau und auf einem ersten Druckniveau in ein Fixierungsreagenz eingebracht wird. Das Fixierungsreagenz enthält zumindest eine zur druck- und/oder temperaturabhängigen Freisetzung zumindest eines Aldehyds befähigte stickstoffhaltige Verbindung, wie oben erläutert. Wie bei herkömmlichen Fixierungsverfahren auch wird dabei die zumindest eine Gewebeprobe zumindest für einen Fixierungszeitraum in dem Fixierungsreagenz belassen.

Erfindungsgemäß ist nun vorgesehen, das Fixierungsreagenz mit der wenigstens einen darin eingebrachten Gewebeprobe während des Fixierungszeitraums auf ein zweites Temperaturniveau oberhalb des ersten Temperaturniveaus und/oder ein zweites Druckniveau oberhalb des ersten Druckniveaus zu bringen. Ferner sieht die vorliegende Erfindung vor, dass ein Gehalt der wenigstens einen zur druck- und/oder temperaturabhängigen Freisetzung des zumindest einen Aldehyds befähigten stickstoffhaltigen Verbindung in dem Fixierungsreagenz unter Verwendung wenigstens einer Konzentrationsmesseinrichtung des Gewebeprozessors ermittelt und auf Grundlage eines Messwerts der wenigstens einen Konzentrationsmesseinrichtung ein Signal ausgegeben wird.

Kern der vorliegenden Erfindung ist damit ein Verfahren, bei dem wenigstens ein Aldehyd kontrolliert durch Druck- und/oder Temperaturbeaufschlagung aus entsprechenden Donoren freigesetzt wird. Ein wesentlicher Vorteil der vorliegenden Erfindung gegenüber dem Stand der Technik ist die steuerbare Freisetzung des entsprechenden Aldehyds bei kontrollierten Bedingungen, beispielsweise innerhalb einer geschlossenen Reaktionskammer eines Gewebeprozessors. Bei entsprechender Druck- und/oder Temperaturbeaufschlagung setzt eine entsprechende Verbindung vermehrt das zumindest eine Aldehyd frei. Die Verbindung zerfällt beispielsweise über eine oder mehrere Zwischenstufen in das zumindest eine Aldehyd und Ammoniak.

Ohne eine entsprechende Druck- und/oder Temperaturbeaufschlagung wird das wenigstens eine Aldehyd nicht quantitativ freigesetzt und die Molekularstruktur der zur druck- und/oder temperaturabhängigen Freisetzung des zumindest einen Aldehyds befähigten stickstoffhaltigen Verbindung ist weitgehend stabil. Eine entsprechende Verbindung wird dabei allenfalls soweit abgebaut, als das wenigstens eine Aldehyd durch die wenigstens eine Gewebeprobe verbraucht wird.

Ohne eine entsprechende Druck- und/oder Temperaturbeaufschlagung ist daher die Fixierungsgeschwindigkeit, verglichen mit herkömmlichen Formalinlösungen wie eingangs erläutert, vergleichsweise langsam. Erst durch die Freisetzung aufgrund der Druck- und/oder Temperaturbeaufschlagung wird eine der herkömmlichen Formalinfixierung entsprechende Reaktions- bzw. Fixierungsgeschwindigkeit erreicht. Damit wird ferner ein wesentlicher Nachteil des bekannten Standes der Technik vermieden, in dem zur Freisetzung von Aldehyden befähigte stickstoffhaltige Verbindungen verwendet werden. Bei einer zu langsamen Fixierung besteht in derartigen herkömmlichen Verfahren die Gefahr der sogenannten Unterfixierung, wodurch es zu Autolyse kommen kann.

Im Vergleich zu herkömmlichen Verfahren zur Formalinfixierung ist das erfindungsgemäß vorgeschlagene Verfahren gleichwohl dazu geeignet, das erwähnte Gesundheitsrisiko bei der Verwendung einer Aldehydfixierung deutlich zu reduzieren. Wird eine zur Freisetzung von Formaldehyd befähigte stickstoffhaltige Verbindung in dem Fixierungsreagenz erfindungsgemäß eingesetzt, kann durch das vorgeschlagene Verfahren ein herkömmliches Formalinfixierungsverfahren in wesentlichen Teilen nachgebildet werden. Die erfindungsgemäß vorgenommene kontrollierte Freisetzung des wenigstens einen Aldehyds ist vorzugsweise auch reversibel, d. h. bei geringerem Druck und geringerer Temperatur unterhalb des zweiten Temperaturniveaus und/oder unterhalb des zweiten Druckniveaus kann sich die zumindest eine zur druck- und/oder temperaturabhängigen Freisetzung des zumindest einen Aldehyds befähigte stickstoffhaltige Verbindung erneut bilden. Die Konzentration des freien Aldehyds verringert sich aufgrund der verschobenen Gleichgewichtsreaktion. Dies ermöglicht es, ein entsprechendes Fixierungsreagenz in einem Gewebeprozessor und/oder in einem Lagerbehälter ohne Gesundheitsrisiko für einen Bediener vorzuhalten und dieses nach der Fixierung kostensparend zu regenerieren.

Methylenglycol ist, wie erwähnt, ein Hydratisierungsprodukt, das Formaldehyd freisetzt. Bei einer herkömmlichen Formalinfixierung, bei der sich entsprechendes Methylenglycol bildet, wird Formaldehyd als Gas direkt in Wasser eingebracht. Die im Rahmen der vorliegenden Erfindung eingesetzten zur druck- und/oder temperaturabhängigen Freisetzung des zumindest einen Aldehyds befähigten stickstoffhaltigen Verbindungen werden hingegen als salzartige Substanz in Wasser eingebracht, haben aber zunächst keine oder ausgesprochen geringe aldehydfreisetzende Wirkung. Erst in Verbindung mit einem Verbraucher wird Aldehyd freigesetzt, insbesondere bei einem niedrigen pH-Wert, und bildet in Wasser beispielsweise Methylenglycol. Entsprechende Hydratisierungsprodukte entstehen daher sekundär. Daraus folgt, dass im Rahmen der vorliegenden Erfindung vorteilhafterweise mindestens zwei Gleichgewichtsreaktionen (Reaktionen der Zwischenprodukte nicht mitberechnet) kombiniert werden, wobei nur die letzte eine Fixierung im Stile klassischen Formalins gewährleistet.

Durch Druck und Temperatur wird daher eine zur druck- und/oder temperaturabhängigen Freisetzung des zumindest einen Aldehyds befähigte stickstoffhaltige Verbindung erst in Zwischen- und Endprodukte gespalten. Ferner kann die Temperatur- und Druckerhöhung die eigentliche Formalinfixierung vorteilhafterweise unterstützen bzw. beeinflussen. Unter ca. 20 °C liegt das Methylenglycol ohne Partialladung vor. In dieser Form kann es Gewebe einfacher durchdringen als die geladene Form. Über 20 °C liegt eher die geladene Form vor. Erst in letzterer erfolgt eine Reaktion mit Proteinen in nennenswertem Umfang.

Eine homogene Fixierung der wenigstens einen Gewebeprobe wird durch vollständige Durchdringung der wenigstens einen Gewebeprobe durch das Fixierungsreagenz erzielt. Diese Durchdringung kann vor oder während der Beaufschlagung mit dem erforderlichen Druck und/oder der erforderlichen Temperatur des zweiten Druck- und/oder Temperaturniveaus erzielt werden. Hierbei werden vorteilhafterweise Maximalzeiten von beispielsweise einer Stunde verwendet, da in anderen Fällen ggf. Autolyse auftritt.

Das erfindungsgemäße Verfahren ermöglicht dabei vorteilhafterweise eine Dreischrittfixierung. Das Gewebe der wenigstens einen Gewebeprobe wird zunächst ganz oder teilweise durchdrungen. Anschließend wird das zumindest eine Aldehyd durch Druck- und/oder Temperaturbeaufschlagung freigesetzt und es erfolgt eine Fixierung. Nach der Fixierung wird das Fixierungsreagenz entfernt und beispielsweise zurück in einen Lagerbehälter gepumpt, wo es beispielsweise abgekühlt und/oder entspannt und damit wieder ungefährlich wird.

Durch den Verbrauch des zumindest einen Aldehyds verarmt das Fixierungsreagenz im Laufe der Zeit, so dass seine Fixierungswirkung nachlässt. In herkömmlichen Formalinlösungen wird ferner ein Ausgasen des Formaldehyds festgestellt und/oder das Formaldehyd wird durch Luftsauerstoff zu Ameisensäure oxidiert. Das Ausgasen des Formaldehyds führt zudem zu einem Gefährdungspotential für die Anwender. Dies kann auch bei den erfindungsgemäß eingesetzten Aldehyde freisetzenden stickstoffhaltigen Verbindungen der Fall sein, jedoch nur in ausgesprochen geringem Umfang. Auch ohne eine Fixierungsreaktion sinkt damit die Formaldehydkonzentration kontinuierlich ab.

Weil im Rahmen der vorliegenden Erfindung jeweils nur ein bestimmter Anteil der wenigstens einen zur druck- und/oder temperaturabhängigen Freisetzung des zumindest einen Aldehyds befähigten stickstoffhaltigen Verbindung, die in dem Fixierungsreagenz enthalten ist, bei der Fixierung kontrolliert freigesetzt wird, kann das Fixierungsreagenz besonders vorteilhaft mehrfach verwendet werden. Die erfindungsgemäß vorgesehene Ermittlung der Konzentration einer solchen Verbindung ist besonders vorteilhaft, weil sie es zuverlässig ermöglicht, festzustellen, ob die Verbindung für eine weitere Fixierung noch in ausreichender Konzentration vorhanden ist. Hierdurch können Fehl-, d.h. Über- oder Unterfixierungen wie oben erläutert, sicher vermieden werden.

Die Ermittlung der Konzentration kann dabei vor, während oder nach der Fixierung erfolgen. Beispielsweise können zur Bereitstellung eines Fixierungsreagenz oder einer Komponente hiervon, die die wenigstens eine zur druck- und/oder temperaturabhängigen Freisetzung des zumindest einen Aldehyds befähigte stickstoffhaltige Verbindung enthält, an den Gewebeprozessor spezifisch angepasste Speicherbehälter (Kartuschen oder Retorten) verwendet werden, die eindeutige Identifizierungsmerkmale aufweisen. Solche Speicherbehälter, bei denen entsprechende Identifizierungsmerkmale auch manipulationssicher ausgebildet sein können (beispielsweise durch Verwendung verschlüsselter Codes in RFID- oder NFD-Chips oder Barcodes), werden in den Gewebeprozessor eingebracht. In dem Gewebeprozessor kann auf Grundlage der Identifizierungsmerkmale festgestellt werden, ob bereits einmal eine entsprechende Konzentration in diesem Speicherbehälter ermittelt wurde. Ist dies der Fall, "weiß" der Gewebeprozessor, ob sich das Fixierungsreagenz für eine weitere Fixierung noch eignet. Bei der erstmaligen Verwendung eines entsprechenden Behälters kann auch eine eindeutige Zuordnung dieses Behälters zu einem spezifischen Gewebeprozessor erfolgen, so dass eine Verwendung des Behälters in einem anderen Gewebeprozessor nicht mehr möglich ist. Hierdurch können beabsichtigte oder unbeabsichtigte Manipulationen oder Fehlbedienungen vermieden und eine sichere Fixierung garantiert werden. Ein entsprechender Behälter kann beispielsweise auch Speichermittel, beispielsweise in Form beschreibbarer Speicherchips, aufweisen, die es ermöglichen, die von einem Gewebeprozessor ermittelte Konzentration der wenigstens einen zur druck- und/oder temperaturabhängigen Freisetzung des zumindest einen Aldehyds befähigten Verbindung zu speichern. Der Gewebeprozessor kann diese Konzentration beispielsweise am Ende eines Fixiervorgangs ermitteln und in den Speichermitteln des Behälters abspeichern. Auf diese Weise kann ein entsprechender Behälter auch in einem anderen Gewebeprozessor verwendet werden, der seinerseits dazu in der Lage ist, die Speichermittel auszulesen.

Eine Ermittlung der Konzentration der wenigstens einen zur druck- und/oder temperaturabhängigen Freisetzung des zumindest einen Aldehyds befähigten stickstoffhaltigen Verbindung ist auch insbesondere deshalb von Vorteil, weil abhängig von der ermittelten Konzentration beispielsweise eine Fixierzeit und/oder der bei der erfindungsgemäßen Fixierung verwendete Druck und/oder die bei der erfindungsgemäßen Fixierung verwendete Temperatur hieran angepasst werden können. So kann, beispielsweise nach mehrmaliger Verwendung des Fixierungsreagenz, die Konzentration einer entsprechenden Verbindung derart absinken, dass eine längere Fixierungszeit und/oder eine Änderung entsprechender Druck- und/oder Temperaturwerte erforderlich ist. Wird die Konzentration vor einer Fixierung ermittelt oder ist diese, wie erläutert, beispielsweise aus einem vorherigen Fixiervorgang bekannt (beispielsweise einem Speicherbehälter zugeordnet oder in Speichermitteln eines entsprechenden Speicherbehälter gespeichert), kann eine entsprechende Anpassung besonders einfach erfolgen.

Während der Fixierung ist die Ermittlung der Konzentration der wenigstens einen zur druck- und/oder temperaturabhängigen Freisetzung des zumindest einen Aldehyds befähigten stickstoffhaltigen Verbindung insbesondere deshalb von Vorteil, weil über die jeweils verbrauchte Verbindung auf den Erfolg des Fixiervorgangs selbst rückgeschlossen werden kann. So kann beispielsweise die Fixierung so lange durchgeführt werden, bis ein Absinken der Konzentration um einen vorgegebenen Wert beobachtet wird. Dies lässt den Rückschluss zu, dass eine bestimmte Menge des zumindest einen Aldehyds freigesetzt wurde und damit zumindest zum Teil in die zu fixierende Probe gelangt ist.

Ein entsprechender Gewebeprozessor kann im Rahmen der vorliegenden Erfindung mit fest und manipulationssicher vorgegeben oder mit vorgebbaren Schwellwerten arbeiten. Beispielsweise kann vorgesehen sein, dass der Gewebeprozessor dann, wenn die Konzentration der wenigstens einen zur druck- und/oder temperaturabhängigen Freisetzung des zumindest einen Aldehyds befähigten stickstoffhaltigen Verbindung unterhalb eines solchen Schwellwerts liegt, keine Fixierung mehr durchführt und der Benutzer damit angehalten wird, das Fixierungsreagenz oder die entsprechende Komponente auszutauschen.

Der Gewebeprozessor kann auch dazu eingerichtet sein, auf Grundlage des erfindungsgemäß ausgegebenen Signals einen Benutzer zu informieren, beispielsweise auf einer Ausgabeeinheit wie einem Monitor, so dass der Benutzer beispielsweise stets weiß, welche Konzentration vorliegt und/oder für welche Zeit und/oder für wie viele Fixierungsvorgänge das Fixierungsreagenz noch ausreicht.

Im Rahmen der Erfindung wird vorgeschlagen, als das erste Temperaturniveau Raumtemperatur (also beispielsweise eine Temperatur von 20 bis 25° C) und/oder eine Kühlraumtemperatur (also beispielsweise 0 bis 10 °C oder -25 bis -15° C) zu verwenden und als das zweite Temperaturniveau eine Temperatur oberhalb entsprechender Temperaturen, insbesondere oberhalb von Raumtemperatur, beispielsweise eine Temperatur von 20 bis 80 °C, zu verwenden. Durch die Verwendung entsprechender Temperaturniveaus, die jeweils an die zur druck- und/oder temperaturabhängigen Freisetzung zumindest eines Aldehyds befähigte stickstoffhaltige Verbindung angepasst werden oder umgekehrt, lässt sich ein entsprechendes Fixierungsreagenz gefahrlos handhaben.

Entsprechendes gilt auch für die erfindungsgemäß vorteilhafterweise verwendeten Druckniveaus. So liegt das erste Druckniveau insbesondere bei Atmosphärendruck oder auch darunter, letzteres beispielsweise zur Vakuuminfiltration einer Gewebeprobe, und das zweite Druckniveau entspricht einem überatmosphärischen Druckniveau. Als überatmosphärisches Druckniveau können beispielsweise 5 bis 1000 kPa Überdruck, beispielsweise 5 bis 20, 20 bis 50, 50 bis 100, 100 bis 500 oder 500 bis 1000 kPa Überdruck, verwendet werden. Bei erhöhten Temperaturen bzw. Drücken liegt das chemische Gleichgewicht für die im Rahmen der vorliegenden Erfindung eingesetzten und zur druck- und/oder temperaturabhängigen Freisetzung des zumindest einen Aldehyds befähigten stickstoffhaltigen Verbindungen auf der Seite des jeweiligen Aldehyds.

Im Rahmen der vorliegenden Erfindung werden als zur druck- und/oder temperaturabhängigen Freisetzung zumindest eines Aldehyds befähigte stickstoffhaltige Verbindungen insbesondere Reaktionsprodukte aus Ammoniak und dem zumindest einen Aldehyd eingesetzt. Bei dem zumindest einen Aldehyd handelt es sich dabei um Formaldehyd und/oder Glutaraldehyd oder um andere Aldehyde. Insbesondere eignen sich für ein Verfahren, wie es im Rahmen der vorliegenden Erfindung vorgeschlagen wird, Verbindungen wie Urotropin, Triazine, Dimethyloldihydroxyethylenharnstoff, Mono-, Di-, Tri-, Tetra-, Penta- und Hexamethylolmelamin, Tetramethylolacetylendiharnstoff, Dimethylolpropylenharnstoff, Acetoguanamin und/oder 5,5-Dimethylhydantoin. Es handelt sich hierbei um sogenannte Formaldehydfreisetzer.

Die Formaldehydfreisetzung wird nachfolgend am Beispiel von Urotropin (Hexamethylentetramin) veranschaulicht, gilt jedoch für die weiteren Verbindungen entsprechend. Bei höheren Temperaturen liegt das chemische Gleichgewicht in der nachfolgend dargestellten Gleichung auf Seiten des Formaldehyds und von Ammoniak (links des Reaktionspfeils). Dies hat zur Folge, dass das Urotropin (rechts des Reaktionspfeils) unter Bildung von Zwischenstufen zerfällt und verbraucht wird.

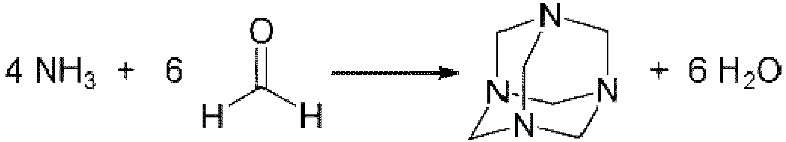

Die Abspaltung des Formaldehyds wird in schwach saurer, wässriger Lösung bei einem pH-Wert von etwa 3 unterstützt. Unterschiedliche Carbonsäuren, beispielsweise Zitronensäure, Essigsäure und Oxalsäure, aber auch Mineralsäuren wie Borsäure und Phosphorsäure unterstützen die Abspaltung des Formaldehyds.

Wichtig für den Gewebeerhalt einer zu fixierenden Gewebeprobe ist eine vergleichsweise geringe Säurestärke, d. h. ein pKs-Wert von unter 6,4. Derartige Säuren beschleunigen die Fixierung zusätzlich. Ein geeigneter pH-Wert kann in einem Bereich von 2 bis 4 liegen.

Zur Unterstützung der Infiltration einer entsprechenden Gewebeprobe wird vorteilhafterweise ein Fixierungsreagenz eingesetzt, das 5 bis 50 % zumindest eines Alkohols, beispielsweise Ethanol, enthält. Ein Einsatz eines Alkohols reduziert die Oberflächenspannung des Fixierungsreagenz bzw. dessen Viskosität.

Im Rahmen der vorliegenden Erfindung ist es besonders vorteilhaft, wenn das erläuterte Verfahren unter Verwendung eines Gewebeprozessors durchgeführt wird, wobei das Fixierungsreagenz mit der zumindest einen darin eingebrachten Gewebeprobe während des Fixierungszeitraums zumindest zeitweise in eine Prozesskammer des Gewebeprozessors eingebracht und in dieser auf das zweite Temperaturniveau und/oder auf das zweite Druckniveau gebracht wird. Die Verwendung eines Gewebeprozessors erlaubt, wie erläutert, eine Fixierung in einem abgeschlossenen Raum und vermeidet damit eine Gefährdung von Personal.

Für die erfindungsgemäß vorgeschlagene Anordnung mit einem Gewebeprozessor, der wenigstens eine Prozesskammer umfasst,, mit einem Probenbehälter, in dem ein Fixierungsreagenz aufgenommen ist, und mit wenigstens einer in das Fixierungsreagenz eingebrachten Gewebeprobe, wobei das Fixierungsreagenz, wie mehrfach erläutert, zumindest eine zur druck- und/oder temperaturabhängigen Freisetzung zumindest eines Aldehyds befähigte stickstoffhaltige Verbindung enthält, gelten die obigen Erläuterungen in gleicher

Weise. Ein Gewebeprozessor ist erfindungsgemäß als Teil der Anordnung mit Mitteln ausgestattet, die zur Druck- und/oder Temperaturbeaufschlagung der wenigstens einen Prozesskammer eingerichtet sind, und mit Mitteln, die ihn zur Durchführung eines Verfahrens wie es zuvor erläutert wurde, befähigen. Dabei enthält der Gewebeprozessor wenigstens eine Konzentrationsmesseinrichtung, die dafür eingerichtet ist, einen Gehalt des wenigstens einen zur druck- und/oder temperaturabhängigen Freisetzung des zumindest einen Aldehyds befähigten stickstoffhaltigen Verbindung in dem Fixierungsreagenz zu ermitteln und auf dieser Grundlage ein entsprechendes Signal auszugeben.

Die Erfindung ist nachfolgend anhand eines Ausführungsbeispiels in der Zeichnung schematisch dargestellt und wird im Folgenden unter Bezugnahme auf die Zeichnung ausführlich beschrieben.

### Figurenbeschreibung

Figur 1 veranschaulicht ein Verfahren gemäß einer Ausführungsform der Erfindung in Form eines vereinfachten, schematischen Ablaufplans.
Figur 2 veranschaulicht einen Gewebeprozessor gemäß einer Ausführungsform der Erfindung in vereinfachter, schematischer Darstellung.

### Ausführliche Beschreibung der Zeichnungen

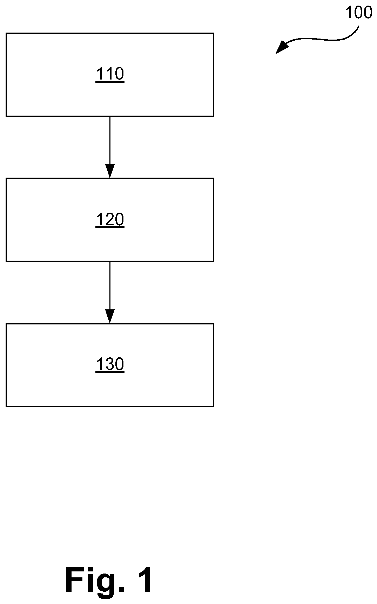

In Figur 1 ist ein Verfahren gemäß einer Ausführungsform der Erfindung in Form eines schematischen Ablaufplans dargestellt und insgesamt mit 100 bezeichnet. Das Verfahren wird, wie zuvor erläutert, in Form einer Dreischrittfixierung durchgeführt und umfasst die Schritte 110, 120 und 130.

In dem Schritt 110 wird wenigstens eine Gewebeprobe in ein Fixierungsreagenz, wie zuvor mehrfach erläutert, eingebracht. In dem Schritt 110 wird dabei vorteilhafterweise eine Infiltrierung der wenigstens einen Gewebeprobe mit dem Fixierungsreagenz durchgeführt, beispielsweise durch eine Vakuuminfiltration. Bereits eigneten Behälter in einen Gewebeprozessor eingebracht sein. In dem Schritt 110 liegt die wenigstens eine Gewebeprobe auf einem ersten Temperaturniveau und auf einem ersten Druckniveau in dem Fixierungsreagenz vor.

In einem Schritt 120, der sich an den Schritt 110 anschließt, wird die zumindest eine Gewebeprobe zumindest für einen Fixierungszeitraum in dem Fixierungsreagenz belassen. In dem Schritt 120 wird insbesondere das Fixierungsreagenz mit der wenigstens einen darin eingebrachten Gewebeprobe, beispielsweise in einer Fixierkammer eines Gewebeprozessors, während des genannten Fixierungszeitraums auf ein zweites Temperaturniveau oberhalb des ersten Temperaturniveaus und/oder auf ein zweites Druckniveau oberhalb des ersten Druckniveaus gebracht. In dem Schritt 120 erfolgt damit die eigentliche Fixierung der Gewebeprobe auf Grundlage der zuvor erläuterten Reaktionsprinzipien.

In einem Schritt 130, der sich dem Schritt 120 anschließt, ist die Fixierung beendet. Das zuvor eingestellte zweite Temperaturniveau und/oder das zuvor eingestellte zweite Druckniveau wird verringert, beispielsweise auf das erste Temperatur- und/oder Druckniveau, wie es in Schritt 110 vorliegt. Die Freisetzung des wenigstens einen Aldehyds aus dem Fixierungsreagenz bzw. der darin enthaltenen, zur druck- und/oder temperaturabhängigen Freisetzung zumindest eines Aldehyds befähigten stickstoffhaltigen Verbindung, wird damit beendet. In dem Schritt 130 kann eventuell vorliegendes gasförmiges Aldehyd aus einer Fixierkammer eines Gewebeprozessors, der in dem Verfahren 100 verwendet wird, abgezogen werden. Das Fixierungsreagenz, in dem nun keine Freisetzung des wenigstens einen Aldehyds mehr in nennenswertem Umfang erfolgt, kann nun abgepumpt und beispielsweise in einen Speichertank überführt werden.

Vor, während und/oder nach den genannten Schritten kann ein Gehalt der wenigstens einen zur druck- und/oder temperaturabhängigen Freisetzung des zumindest einen Aldehyds befähigten stickstoffhaltigen Verbindung in dem Fixierungsreagenz unter Verwendung wenigstens einer Konzentrationsmesseinrichtung eines verwendeten Gewebeprozessors ermittelt und auf Grundlage eines Messwerts der wenigstens einen Konzentrationsmesseinrichtung ein Signal ausgegeben werden.

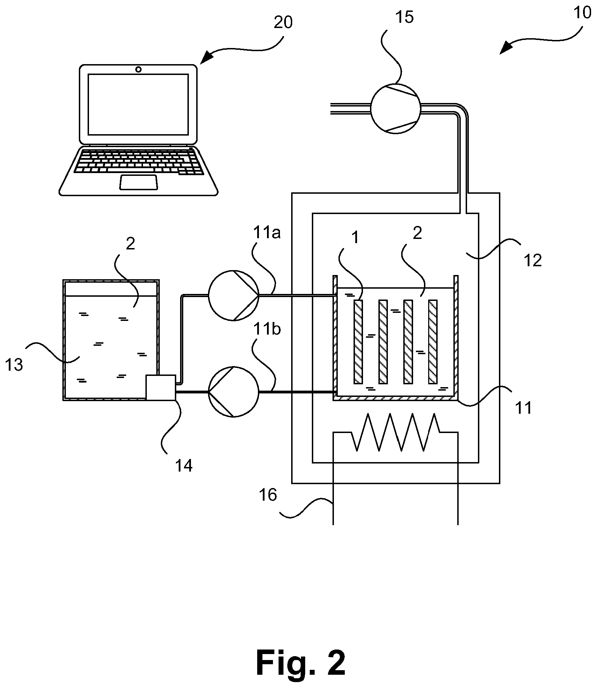

In Figur 2 ist ein Gewebeprozessor gemäß einer Ausführungsform der Erfindung schematisch dargestellt und mit 10 bezeichnet. Der Gewebeprozessor 10 umfasst im dargestellten Beispiel einen Probenbehälter 11 in dem, wie in Figur 2 dargestellt, vier Gewebeproben 1 (nur teilweise bezeichnet) in ein Fixierungsreagenz 2 eingebracht sind. Zur Einbringung und Entnahme von Fixierungsreagenz aus dem Probenbehälter 11 sind geeignete Fluidleitungen 11a und 11b mit Pumpen (jeweils ohne Bezeichnung) vorgesehen. Die Leitungen 11a und 11b sind mit einem Speicherbehälter 13 verbunden.

Dem Speicherbehälter 13 ist eine Konzentrationsmesseinrichtung 14 zugeordnet, die dafür eingerichtet ist, beispielsweise mittels spektrophotometrischer Verfahren, einen Gehalt der wenigstens einen zur druck- und/oder temperaturabhängigen Freisetzung des zumindest einen Aldehyds befähigten stickstoffhaltigen Verbindung in dem Fixierungsreagenz 2 zu ermitteln. Durch die Konzentrationsmesseinrichtung 14 kann beispielsweise an eine Benutzerschnittstelle 20, die zur Bedienung des Gewebeprozessors 10 eingerichtet ist, ein Signal ausgegeben werden.

Der Gewebeprozessor 10 weist eine Prozesskammer 12 auf, in die der Probenbehälter 11 eingebracht werden kann. Die Prozesskammer 12 kann vorteilhafterweise derart abgeschlossen werden, dass während des mehrfach erwähnten Fixierungszeitraums, in dem ggf. wenigstens ein Aldehyd freigesetzt wird, keine Gefährdung eines Benutzers möglich ist. Die Prozesskammer 12 kann auch an eine Absaugeinrichtung (nicht gezeigt) angeschlossen sein.

Der Gewebeprozessor 10 umfasst ferner Mittel 15 und 16, die zur Druck- und/oder Temperaturbeaufschlagung der Prozesskammer 12 eingerichtet sind, beispielsweise eine Druckpumpe 15 und eine Heizwendel 16.

## Patentansprüche

1. Verfahren (100) zur Fixierung wenigstens einer Gewebeprobe (1), das unter Verwendung eines Gewebeprozessors (10) durchgeführt wird und bei dem die wenigstens eine Gewebeprobe (1) auf einem ersten Temperaturniveau und auf einem ersten Druckniveau in ein Fixierungsreagenz (2) eingebracht wird, das zumindest eine zur druck- und/oder temperaturabhängigen Freisetzung zumindest eines Aldehyds befähigte stickstoffhaltige Verbindung enthält, wobei die zumindest eine Gewebeprobe (1) zumindest für einen Fixierungszeitraum in dem Fixierungsreagenz (2) belassen wird, wobei das Fixierungsreagenz (2) mit der wenigstens einen darin eingebrachten Gewebeprobe (1) während des Fixierungszeitraums auf ein zweites Temperaturniveau oberhalb des ersten Temperaturniveaus und/oder ein zweites Druckniveau oberhalb des ersten Druckniveaus gebracht wird, und dass ein Gehalt der wenigstens einen zur druck- und/oder temperaturabhängigen Freisetzung des zumindest einen Aldehyds befähigten stickstoffhaltigen Verbindung in dem Fixierungsreagenz (2) unter Verwendung wenigstens einer Konzentrationsmesseinrichtung (14) des Gewebeprozessors (10) ermittelt und auf Grundlage eines Messwerts der wenigstens einen Konzentrationsmesseinrichtung (14) ein Signal ausgegeben wird.

2. Verfahren (100) nach Anspruch 1, bei dem das erste Temperaturnivau Raumtemperatur und/oder einer Kühlraumtemperatur entspricht und das zweite Temperaturniveau bei 20 bis 80 °C liegt.

3. Verfahren (100) nach Anspruch 1 oder 2, bei dem das erste Druckniveau höchstens Atmosphärendruck entspricht und das zweite Druckniveau einem überatmosphärischen Druckniveau entspricht.

4. Verfahren (100) nach einem der vorstehenden Ansprüche, bei dem die wenigstens eine zur druck- und/oder temperaturabhängigen Freisetzung zumindest eines Aldehyds befähigte stickstoffhaltige Verbindung zumindest ein Reaktionsprodukt aus Ammoniak und dem zumindest einen Aldehyd umfasst.

5. Verfahren (100) nach einem der vorstehenden Ansprüche, bei dem das zumindest eine Aldehyd Formaldehyd und/oder Glutaraldehyd umfasst.

6. Verfahren (100) nach einem der vorstehenden Ansprüche, bei dem die wenigstens eine zur druck- und/oder temperaturabhängigen Freisetzung zumindest eines Aldehyds befähigte stickstoffhaltige Verbindung Urotropin, wenigstens ein Triazin, Dimethyloldihydroxyethylenharnstoff, Mono-, Di-, Tri-, Tetra-, Penta- und Hexamethylolmelamin, Tetramethylolacetylendiharnstoff, Dimethylolpropylenharnstoff, Acetoguanamin und/oder 5,5-Dimethylhydantoin umfasst.

7. Verfahren (100) nach einem der vorstehenden Ansprüche, bei dem das Fixierungsreagenz zumindest eine Säure mit einem pKs-Wert von weniger als 6,4 enthält und/oder einen pH-Wert von 2 bis 4 aufweist.

8. Verfahren (100) nach einem der vorstehenden Ansprüche, bei dem das Fixierungsreagenz 5 bis 50% zumindest eines Alkohols enthält.

9. Verfahren (100) nach einem der vorstehenden Ansprüche, wobei das Fixierungsreagenz (2) mit der zumindest einen darin eingebrachten Gewebeprobe (1) während des Fixierungszeitraums zumindest zeitweise in eine Prozesskammer (12) des Gewebeprozessors (10) eingebracht und in dieser auf das zweite Temperaturniveau und/oder auf das zweite Druckniveau gebracht wird.

10. Anordnung mit einem Gewebeprozessor (10) mit wenigstens einer Prozesskammer (12), mit einem Probenbehälter (11), in dem ein Fixierungsreagenz (2) aufgenommen ist, und mit wenigstens einer in das Fixierungsreagenz (2) eingebrachten Gewebeprobe (1), wobei das Fixierungsreagenz (2) zumindest eine zur druck- und/oder temperaturabhängigen Freisetzung zumindest eines Aldehyds befähigte stickstoffhaltige Verbindung enthält, wobei Mittel (15, 16) bereitgestellt sind, die zur Druck- und/oder Temperaturbeaufschlagung der wenigstens einen Prozesskammer (12) eingerichtet sind, und Mittel (13 - 16) bereitgestellt sind, die zur Durchführung eines Verfahrens nach einem der Ansprüche 1 bis 9 eingerichtet sind und wenigstens eine Konzentrationsmesseinrichtung (14) umfassen, die dafür eingerichtet ist, einen Gehalt der wenigstens einen zur druck- und/oder temperaturabhängigen Freisetzung des zumindest einen Aldehyds befähigten stickstoffhaltigen Verbindung in dem Fixierungsreagenz (2) zu ermitteln und auf Grundlage eines Messwerts der wenigstens einen Konzentrationsmesseinrichtung (14) ein Signal auszugeben.

## Claims

1. Method (100) for fixing at least one tissue sample (1), which is performed using a tissue processor (10) and in which the at least one tissue sample (1) is introduced at a first temperature level and at a first pressure level into a fixing reagent (2) which contains at least one nitrogen-containing compound capable of releasing at least one aldehyde in dependence on pressure and/or temperature, wherein the at least one tissue sample (1) is kept in the fixing reagent (2) at least for a fixing period, wherein the fixing reagent (2) with the at least one tissue sample (1) introduced therein is brought to a second temperature level above the first temperature level and/or a second pressure level above the first pressure level during the fixing period, and wherein a content of the at least one nitrogen-containing compound capable of releasing the at least one aldehyde in dependence on pressure and/or temperature in the fixing reagent (2) is determined using at least one concentration measuring device (14) of the tissue processor (10) and a signal is output on the basis of a measured value of the at least one concentration measuring device (14).

2. Method (100) according to claim 1, wherein the first temperature level corresponds to room temperature and/or a cold room temperature and the second temperature level is at 20 to 80 °C.

3. Method (100) according to claim 1 or 2, wherein the first pressure level corresponds at most to atmospheric pressure and the second pressure level corresponds to a super-atmospheric pressure level.

4. Method (100) according to any one of the preceding claims, wherein the at least one nitrogen-containing compound capable of releasing at least one aldehyde in dependence on pressure and/or temperature comprises at least one reaction product of ammonia and the at least one aldehyde.

5. Method (100) according to any one of the preceding claims, wherein the at least one aldehyde comprises formaldehyde and/or glutaraldehyde.

6. Method (100) according to any one of the preceding claims, wherein the at least one nitrogen-containing compound capable of releasing at least one aldehyde in dependence on pressure and/or temperature comprises urotropin, at least one triazine, dimethylol dihydroxyethylene urea, mono-, di-, tri-, tetra-, penta- and hexamethylol melamine, tetramethylolacetylene diurea, dimethylolpropylene urea, acetoguanamine and/or 5,5-dimethylhydantoin.

7. Method (100) according to any one of the preceding claims, wherein the fixing reagent contains at least one acid with a pKa value of less than 6.4 and/or comprises a pH value of 2 to 4.

8. Method (100) according to any one of the preceding claims, wherein the fixing reagent contains 5 to 50% of at least one alcohol.

9. Method (100) according to any one of the preceding claims, wherein the fixing reagent (2) with the at least one tissue sample (1) introduced therein is introduced at least temporarily into a process chamber (12) of the tissue processor (10) during the fixing period and is brought to the second temperature level and/or to the second pressure level therein.

10. Arrangement with a tissue processor (10) with at least one process chamber (12), with a sample container (11) in which a fixing reagent (2) is accommodated, and with at least one tissue sample (1) introduced into the fixing reagent (2), wherein the fixing reagent (2) contains at least one nitrogen-containing compound capable of releasing at least one aldehyde in dependence on pressure and/or temperature, wherein means (15, 16) are provided for applying pressure and/or temperature to the at least one process chamber (12), and means (13 - 16) which are configured to perform a method according to any one of claims 1 to 9 and comprise at least one concentration measuring device (14) which is configured to determine a content of the at least one nitrogen-containing compound capable of releasing the at least one aldehyde in dependence on pressure and/or temperature in the fixing reagent (2) and to output a signal on the basis of a measured value of the at least one concentration measuring device (14).

## Revendications

1. Méthode (100) pour fixer au moins un échantillon de tissu (1), qui est conduit en utilisant un processeur de tissu (10) et dans lequel le au moins un échantillon de tissu (1) est introduit à un premier niveau de température et à un premier niveau de pression dans un réactif de fixation (2) qui contient au moins un composé contenant de l'azote capable de libérer au moins un aldéhyde en dépendance de la pression et/ou de la température, dans lequel le au moins un échantillon de tissu (1) est laissé dans le réactif de fixation (2) au moins pendant une période de fixation, dans lequel le réactif de fixation (2) avec le au moins un échantillon de tissu (1) qui y est introduit est amené à un deuxième niveau de température supérieur au premier niveau de température et/ou à un deuxième niveau de pression supérieur au premier niveau de pression pendant la période de fixation, et dans lequel une teneur en au moins un composé azoté capable de libérer au moins un aldéhyde en dépendance de la pression et/ou de la température dans le réactif de fixation (2) est déterminée en utilisant au moins un dispositif de mesure de la concentration (14) du processeur de tissu (10) et un signal est émis sur la base d'une valeur de mesure de l'au moins un dispositif de mesure de la concentration (14).

2. Méthode (100) selon la revendication 1, dans laquelle le premier niveau de température correspond à la température ambiante et/ou à une température d'une chambre froide et le deuxième niveau de température se situe entre 20 et 80°C.

3. Méthode (100) selon la revendication 1 ou 2, dans laquelle le premier niveau de pression correspond au maximum à la pression atmosphérique et le deuxième niveau de pression correspond à un niveau de pression super-atmosphérique.

4. Méthode (100) selon l'une des revendications précédentes, dans lequel le au moins un composé azoté capable de libérer au moins un aldéhyde en dépendence de la pression et/ou de la température comprend au moins un produit de réaction de l'ammoniac et du au moins un aldéhyde.

5. Méthode (100) selon l'une des revendications précédentes, dans laquelle le au moins un aldéhyde comprend du formaldéhyde et/ou du glutaraldéhyde.

6. Méthode (100) selon l'une des revendications précédentes, dans laquelle le au moins un composé azoté capable de libérer au moins un aldéhyde en dépendance de la pression et/ou de la température comprend l'urotropine, au moins une triazine, la diméthyloldihydroxyéthylène-urée, la mono-, di-, tri-, tétra-, penta- et hexaméthylolmélamine, la tétraméthylolacétylènediurée, la diméthylolpropylèneurée, l'acétoguanamine et/ou la 5,5-diméthylhydantoïne.

7. Méthode (100) selon l'une des revendications précédentes, dans laquelle le réactif de fixation contient au moins un acide ayant une valeur de pKa inférieure à 6,4 et/ou comprise une valeur de pH entre 2 et 4.

8. Méthode (100) selon l'une des revendications précédentes, dans laquelle le réactif de fixation contient 5 à 50% d'au moins un alcool.

9. Méthode (100) selon l'une des revendications précédentes, dans laquelle le réactif de fixation (2) avec le au moins un échantillon de tissu (1) qui y est introduit est introduit au moins temporairement dans une chambre de traitement (12) du processeur de tissu (10) pendant la période de fixation et y est amené au deuxième niveau de température et/ou au deuxième niveau de pression.

10. Dispositif avec un processeur de tissu (10) avec au moins une chambre de traitement (12), avec un récipient à échantillons (11) dans lequel est logé un réactif de fixation (2) et avec au moins un échantillon de tissu (1) introduit dans le réactif de fixation (2), le réactif de fixation (2) contenant au moins un composé contenant de l'azote capable de libérer au moins un aldéhyde en dépendance de la pression et/ou de la température, dans lequel des moyens (15, 16) sont prévus pour appliquer une pression et/ou une température à la au moins une chambre de traitement (12), et des moyens (13 - 16) qui sont configurés pour réaliser un méthode selon l'une des revendications 1 à 9 et qui comprennent au moins un dispositif de mesure de la concentration (14) qui est configuré pour déterminer une teneur en au moins un composé contenant de l'azote capable de libérer au moins un aldéhyde en dépendance de la pression et/ou de la température dans le réactif de fixation (2) et pour émettre un signal sur la base d'une valeur mesurée de l'au moins un dispositif de mesure de la concentration (14).
